(19) 

**Europäisches Patentamt**
**European Patent Office**
**Office européen des brevets**

(11) **EP 4 535 878 A1**

(12) **EUROPEAN PATENT APPLICATION**
published in accordance with Art. 153(4) EPC

(43) Date of publication:
**09.04.2025 Bulletin 2025/15**

(21) Application number: **22943195.2**

(22) Date of filing: **27.05.2022**

(51) International Patent Classification (IPC):
*H04W 52/02* (2009.01)

(52) Cooperative Patent Classification (CPC):
**H04W 52/02**

(86) International application number:
**PCT/CN2022/095566**

(87) International publication number:
**WO 2023/225997 (30.11.2023 Gazette 2023/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **HE, Chuanfeng
Dongguan, Guangdong 523860 (CN)**

(74) Representative: **RGTH
Patentanwälte PartGmbB
Neuer Wall 10
20354 Hamburg (DE)**

(54) **WIRELESS COMMUNICATION METHOD, TERMINAL DEVICE, AND NETWORK DEVICE**

(57)    A wireless communication method, terminal device and network device are beneficial to reducing the power consumption of the terminal device. The method includes: receiving, by the terminal device, a wake up signal including a target sequence, where the target sequence is a preamble sequence or a synchronization sequence, or the target sequence is used to carry wake up information, and the wake up signal is used to wake up one or more terminal devices.

200

| Terminal device | | Network device |

S210，a wake up signal including a target sequence, where the target sequence is a preamble sequence or a synchronization sequence, or the target sequence is used for carrying wake up information

FIG. 2

EP 4 535 878 A1

**Description**

## TECHNICAL FIELD

Embodiments of the present application relate to the field of communications, and specifically to a wireless communication method, a terminal device, and a network device.

## BACKGROUND

For a terminal device in the radio resource control (RRC) connected state, the main power consumption comes from monitoring the physical downlink control channel (PDCCH). For a terminal device in the RRC idle or inactive state, the main power consumption comes from periodically receiving paging messages. Therefore, how to achieve power saving of terminal devices is an urgent problem to be solved.

## SUMMARY

The present application provides wireless communication methods, terminal devices and network devices, which are conducive to reducing the power consumption of the terminal device.

In a first aspect, a wireless communication method is provided, including: receiving, by a terminal device, a wake up signal including a target sequence. The target sequence is used for at least one of the following: identifying the wake up signal, synchronizing, and carrying wake up information; and the wake up signal is used to wake up one or more terminal devices.

In a second aspect, a wireless communication method is provided, including: transmitting, by a network device, a wake up signal including a target sequence. The target sequence is used for at least one of the following: identifying the wake up signal, synchronizing, and carrying wake up information; and the wake up signal is used to wake up one or more terminal devices.

In a third aspect, a terminal device is provided, and the terminal device is configured to perform the method in the first aspect or various implementations of the first aspect.

Specifically, the terminal device includes a functional module for performing the method in the first aspect or various implementations of the first aspect.

In a fourth aspect, a network device is provided, and the network device is configured to perform the method in the second aspect or various implementations of the second aspect.

Specifically, the network device includes a functional module for performing the method in the second aspect or various implementations of the second aspect.

In a fifth aspect, a terminal device is provided, including a processor and a memory. The memory is configured to store a computer program, and the processor is configured to invoke and run the computer program stored in the memory to perform the method in the first aspect or various implementations of the first aspect.

In a sixth aspect, a network device is provided, including a processor and a memory. The memory is configured to store a computer program, and the processor is configured to invoke and run the computer program stored in the memory to perform the method in the second aspect or various implementations of the second aspect.

In a seventh aspect, a chip is provided, and the chip is configured to implement the method in any one of the first and second aspects or in their various implementations.

Specifically, the chip includes a processor, configured to invoke a computer program from a memory and run the computer program, so as to enable a device equipped with the apparatus to perform the method in any one of the first and second aspects or their various implementations.

In an eighth aspect, a computer-readable storage medium is provided, the computer-readable storage medium is configured to store a computer program, and the computer program enables a computer to perform the method in any one of the first and second aspects or their various implementations.

In a ninth aspect, a computer program product is provided, including computer program instructions. The computer program instructions enable a computer to perform the method in any one of the first and second aspects or their various implementations.

In a tenth aspect, a computer program is provided. When run on a computer, the computer program enables the computer to perform the method in any one of the first and second aspects or their various implementations.

Through the above technical solutions, the network device may transmit the wake up signal to the terminal device. The wake up signal includes a target sequence, and the target sequence is used for at least one of the following: identifying the wake up signal, synchronization, and carrying wake up information. Furthermore, the terminal device may be waken up based on the wake up signal to receive signals. That is to say, the terminal device may only listen the wake up signal, and only receive signals in a case where the wake up signal is received, which is conducive to reducing the power consumption of the terminal device.

## BRIEF DESCRIPTION OF THE DRAWINGS

FIG. 1 is a schematic diagram of a communication system architecture provided in the embodiments of the present application.

FIG. 2 is a schematic interaction diagram of a wireless communication method provided according to the embodiments of the present application.

FIG. 3 is a schematic diagram showing a form of a receiver of a terminal device provided in the embodiments of the present application.

FIG. 4 is a schematic diagram showing a form of a receiver of another terminal device provided in the embodiments of the present application.

FIG. 5 is a schematic diagram showing a principle for generating a wake up signal provided in the embodiments of the present application.

FIG. 6 is a schematic diagram showing information composition of a wake up signal provided in the embodiments of the present application.

FIG. 7 is a schematic diagram showing information composition of another wake up signal provided in the embodiments of the present application.

FIG. 8 is a schematic diagram showing a method for generating a wake up information sequence provided in the embodiments of the present application.

FIG. 9 is a schematic diagram showing information composition of yet another wake up signal provided in the embodiments of the present application.

FIG. 10 is a schematic diagram showing information composition of yet another wake up signal provided in the embodiments of the present application.

FIG. 11 is a schematic diagram showing information composition of yet another wake up signal provided in the embodiments of the present application.

FIG. 12 is a schematic diagram showing that wake up signals of different UEs are transmitted by different frequency domain resources in the embodiments of the present application.

FIG. 13 is a schematic diagram showing that wake up signals of different UEs are transmitted by different time-frequency resources in the embodiments of the present application.

FIG. 14 is a schematic block diagram of a terminal device provided according to the embodiments of the present application.

FIG. 15 is a schematic block diagram of a network device provided according to the embodiments of the present application.

FIG. 16 is a schematic block diagram of a communication device provided according to the embodiments of the present application.

FIG. 17 is a schematic block diagram of a chip provided according to the embodiments of the present application.

FIG. 18 is a schematic block diagram of a communication system provided according to the embodiments of the present application.

## DETAILED DESCRIPTION

The technical solutions in the embodiments of the present application will be described in combination with the accompanying drawings in the embodiments of the present application. Obviously, the described embodiments are merely some but not all embodiments of the present disclosure. All other embodiments obtained by a person of ordinary skill in the art without paying creative efforts shall be included in the protection scope of the present application.

The technical solutions in the embodiments of the present application may be applied to various communication systems, such as a global system of mobile communication (GSM) system, a code division multiple access (CDMA) system, a wideband code division multiple access (WCDMA) system, a general packet radio service (GPRS) system, a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN) system, wireless fidelity (Wi-Fi) system, a 5th-generation (5G) communication system, a cellular internet of things (IoT) system, cellular passive IoT system, and other communication systems.

Generally, the limited number of connections is supported by traditional communication systems and is easy to implement. However, with the development of the communication technology, mobile communication systems will not only support the traditional communication, but also support, for example, device to device (D2D) communication, machine to machine (M2M) communication, machine type communication (MTC), vehicle to vehicle (V2V) communication, or vehicle to everything (V2X) communication, and the embodiments of the present application may also be applied to these communication systems.

Optionally, the communication systems in the embodiments of the present application may be applied to a carrier aggregation (CA) scenario, a dual connectivity (DC) scenario, or a standalone (SA) networking scenario.

Optionally, the communication systems in the embodiments of the present application may be applied to an unlicensed spectrum, which may also be considered as a shared spectrum; or the communication systems in the embodiments of the present application may be applied to a licensed spectrum, which may also be considered as an unshared spectrum.

Various embodiments of the present application are described in combination with a network device and a terminal device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, or a user apparatus.

In the embodiments of the present application, the network device may be a device for communicating with a mobile device. The network device may be an access point (AP) in WLAN, a base transceiver station (BTS) in GSM or CDMA, or a base station (NodeB, NB) in WCDMA; or the network device may be an evolutional Node B (eNB or eNodeB) in LTE, a relay station or access point, a vehicle-mounted device, a wearable device, a network device (gNB) in an NR network, a network device in a cellular Internet of Things, a network device in a cellular passive Internet of Things, a network device in a future evolved PLMN network, or a network device in an NTN network.

By way of example rather than a limitation, in the embodiments of the present application, the network device may have a mobile characteristic. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station disposed on land or in water.

In the embodiments of the present application, the network device may provide services for a cell, and the terminal device may communicate with the network device through a transmission resource (e.g., a frequency domain resource, or a spectrum resource) used by the cell. The cell may be a cell corresponding to the network device (e.g., a base station). The cell may belong to a macro base station, or belong to a base station corresponding to a small cell. Small cells here may include: a metro cell, a micro cell, a pico cell, a femto cell, etc. These small cells have characteristics of small coverage and low transmission power, and are suitable for providing high-speed data transmission services.

The terminal device may be a station (ST) in WLAN, or may be a cellular phone, a cordless phone, a session initiation protocol (SIP) phone, a wireless local loop (WLL) station, a personal digital assistant (PDA) device, a handheld device with a wireless communication function, a computing device or another processing device connected to a wireless modem, a vehicle-mounted device, a wearable device, a terminal device in a next-generation communication system (such as an NR network), a terminal device in the future evolved public land mobile network (PLMN) network, a terminal device in the cellular Internet of things, or a terminal device in the cellular passive Internet of things.

In the embodiments of the present application, the terminal device may be deployed on land including indoor or outdoor, handheld, wearable or vehicle-mounted; or the terminal device may be deployed on water (e.g., on a ship); or the terminal device may be deployed in the air (e.g., on an airplane, a balloon, a satellite, etc.).

In the embodiments of the present application, the terminal device may be a mobile phone, a pad, a computer with a wireless transceiving function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

As an example rather than a limitation, in the embodiments of the present application, the terminal device may also be a wearable device. The wearable device, which is also referred to as a wearable smart device, is a generic term of devices that are developed by intelligent design on daily wears by using wearable technology and can be worn, such as glasses, gloves, watches, clothing, and shoes. The wearable device is a portable device that is worn directly on the body, or integrated into the user's clothing or accessories. The wearable device not only is a hardware device, but also implements powerful functions through software support, data interaction, and cloud interaction. Generalized wearable smart devices include devices that have full functions and large sizes, and may implement all or part functions without relying on smart phones (such as a smart watch or smart glasses), as well as devices that focus on a certain kind of application functions only and need to be used in combination with any other device such as a smart phone (such as various smart bracelets and smart pieces of jewelry for monitoring physical signs).

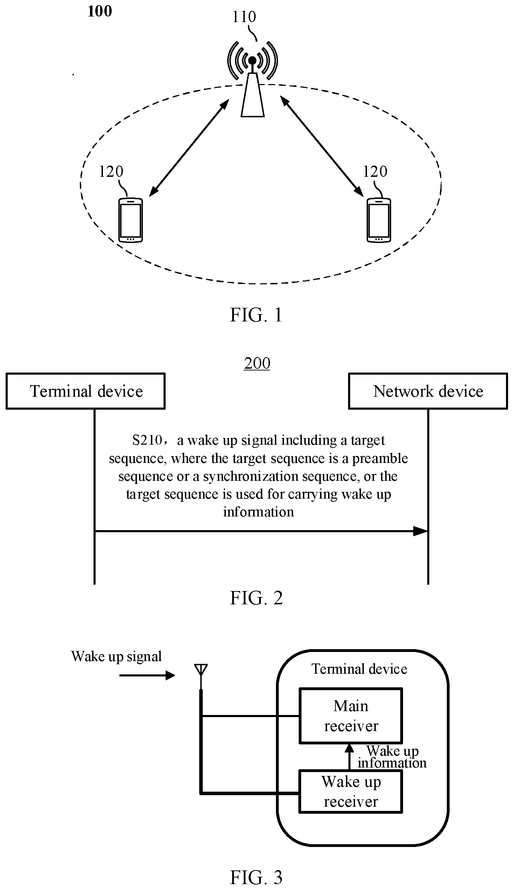

For example, a communication system 100 to which the embodiments of the present application are applied is shown in FIG. 1. The communication system 100 may include a network device 110, which may be a device for communicating with a terminal device 120 (or referred to as a communication terminal or a terminal). The network device 110 may provide communication coverage for a specific geographical area and may communicate with terminal devices located within the coverage area.

FIG. 1 illustratively shows one network device and two terminal devices. Optionally, the communication system 100 may include a plurality of network devices and another number of terminal devices within a coverage area of each network device, and the embodiments of the present application are not limited thereto.

Optionally, the communication system 100 may further include other network entities such as a network controller and a mobility management entity, which is not limited in the embodiments of the present application.

It should be understood that, in the embodiments of the present application, a device with a communication function in the network/system may be referred to as a communication device. The communication system 100 shown in FIG. 1 is taken as an example, the communication device may include a network device 110 with the communication function and a terminal device 120 with the communication function, and the network device 110 and the terminal device 120 may be the specific devices described above, which will not be repeated here; the communication device may further include other devices in the communication system 100, such as a network controller, a mobility management entity, or other network entities, which is not limited in the embodiments of the present application.

It should be understood that, the terms "system" and "network" are often used interchangeably herein. The term "and/or" is only an association relationship for describing associated objects herein, which indicates that three relationships may exist. For example, A and/or B may indicate three cases that: A exists alone, both A and B exist, and B exists alone. In addition, the character "/" herein generally indicates that related objects before and after this character are in an "or" relationship.

It should be understood that, the "indicate" mentioned in the embodiments of the present application may mean a direct indication or an indirect indication, or may represent that there is an association relationship. For example, that A indicates B may mean that A directly indicates B, e.g., that B may be obtained through A; or it may mean that A indirectly indicates B, e.g., that A indicates C, and B may be obtained through C; or it may mean that there is an association relationship between A and B.

The term "correspond" described in the embodiments of the present application may mean a direct or indirect correspondence between the two, or an association relationship between the two, or a relationship such as indicating and being indicated, or configuring and being configured.

In the embodiments of the present application, the "predefined" may be implemented by pre-storing corresponding codes, tables or other manners that can be used to indicate related information in the devices (for example, including a terminal device and a network device). The present application does not limit its specific implementation. For example, the predefined may refer to what is defined in a protocol.

In the embodiments of the present application, the "protocol" may refer to standard protocols in the communication field, which may include, for example, an LTE protocol, an NR protocol, and related protocols used in future communication systems, and the present application does not limit thereto.

To facilitate understanding of the technical solutions in the embodiments of the present application, the technical solutions of the present application are described in details below through specific embodiments. The above related technologies, as optional solutions, may be arbitrarily combined with the technical solutions in the embodiments of the present application, and those combined solutions all belong to protection scope of the embodiments of the present application. The embodiments of the present application include at least some of the following contents.

FIG. 2 is a schematic diagram of a wireless communication method 200 according to the embodiments of the present application. As shown in FIG. 2, the method 200 includes at least part of the following:

S210, transmitting, by a network device, a wake up signal (WUS), where the wake up signal includes a target sequence, and the wake up signal is used to wake up one or more terminal devices.

Correspondingly, a terminal device receives the WUS.

In some embodiments, the wake up signal may be received by the terminal device through a wake up receiver (WUP) (also referred to as a low-power receiver).

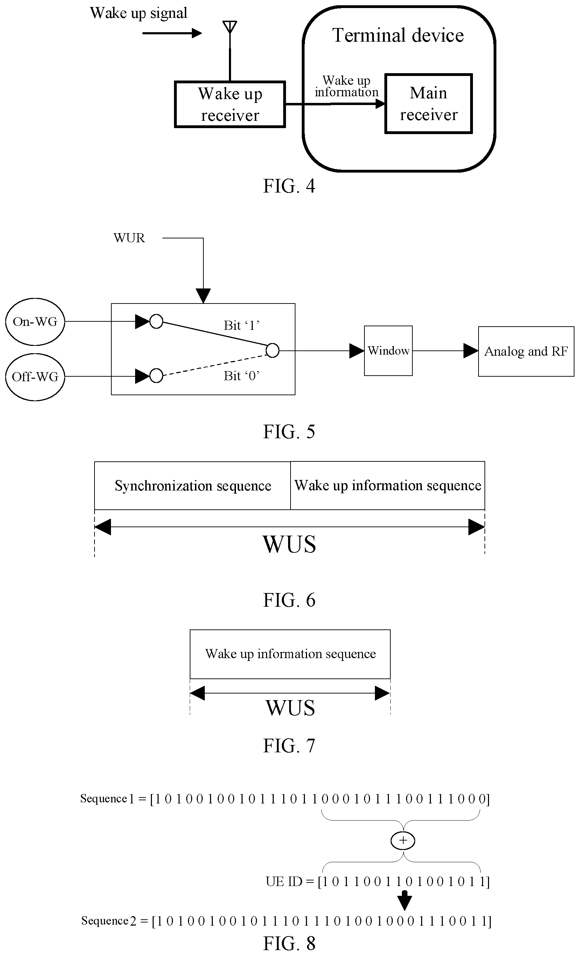

It should be understood that the present application does not limit the specific implementation of the wake up receiver. For example, as shown in FIG. 3, the wake up receiver may be integrated with the terminal device and may be used as an additional module of the receiver of the terminal device. Alternatively, as shown in FIG. 4, the wake up receiver may also be used alone as a wake up function module of the terminal device.

Specifically, as shown in FIG. 3, the terminal device includes a first receiver (also referred to as a low-power receiver, or a wake up receiver) and a second receiver (also referred to as a main receiver); the power consumption of the first receiver is lower than the power consumption of the second receiver, the wake up signal is received based on the wake up receiver, and the wake up signal is used to wake up the main receiver.

Specifically, as shown in FIG. 4, the terminal device includes a second receiver (also referred to as a main receiver), and the terminal device is provided with an external wake up receiver; the power consumption of the wake up receiver is lower than the power consumption of the main receiver, the wake up signal is received based on the wake up receiver, and the wake up signal is used to wake up the main receiver.

In some embodiments, the main receiver may have strong information processing capabilities, such as supporting large bandwidth (e.g., 100 MHz) and high-speed (e.g., 1 Gbps) information reception and processing, and high-complexity waveform detection. For example, the main receiver may be an LTE terminal receiver, an NR terminal receiver, or other terminal receivers in future standard evolution.

In some embodiments, the wake up receiver may have relatively low information processing capabilities, such as only supporting narrow bandwidth and low-speed information reception and processing, and low-complexity waveform detection.

In some embodiments, the description that the wake up signal is used to wake up the terminal device may mean that the wake up signal is used to wake up the main receiver of the terminal device.

That is to say, the main receiver may be activated based on the wake up signal, which is beneficial to reducing the power consumption of the terminal device.

In some embodiments, the terminal device wakes up the main receiver to listen PDCCH or a paging message.

In some embodiments, the target sequence may be used for identifying the wake up signal, and/or synchronizing, and/or carrying the wake up information.

For example, the target sequence may include a preamble sequence for identifying the wake up signal or a synchronization sequence for synchronizing, and/or a sequence for carrying the wake up information, which is denoted as a wake up information sequence.

It should be understood that, in the embodiments of the present application, the preamble sequence may also be used for synchronizing, and the synchronization sequence may also be used as the preamble sequence.

In some embodiments of the present application, the wake up signal may be generated using a low-complexity modulation method. For example, the wake up signal is generated using on-off keying (OOK) modulation, e.g., multi-carrier OOK modulation. For another example, the wake up signal is generated using amplitude shift keying (ASK) modulation, e.g., multi-carrier ASK modulation. The modulation principle of the OOK is to modulate an amplitude of a carrier signal to a non-zero value and zero value, which correspond to On and Off respectively, for representing information bits. The OOK modulation is also known as 2 amplitude shift keying (2ASK). As shown in FIG. 5, bit 1 is modulated as On, and bit 0 is modulated as Off, where On can be generated by an On waveform generator (On-WG), and Off can be generated by an Off waveform generator (Off-WG).

In some embodiments, a downlink signal is generated using a high-complexity modulation method, e.g., an orthogonal frequency division multiplexing (OFDM) modulation. As an implementation, the network device may obtain the wake up signal by performing the OOK modulation or ASK modulation on multiple subcarriers of an OFDM signal.

That is to say, the wake up signal in the embodiments of the present application may adopt a simple modulation waveform, which is beneficial to reducing the complexity of the wake up receiver detecting the wake up signal.

In some embodiments, the wake up signal includes the wake up information, and the wake up information may be carried through a sequence, or may be carried in other ways. For example, the wake up signal directly includes the wake up information itself, or may include information bits obtained by encoding the wake up information. The present application is not limited thereto.

The carrying method of the wake up information will be described below in combination with specific embodiments.

In Embodiment 1, the wake up information is carried through the sequence.

In Embodiment 1-1, the target sequence includes a first sequence and a second sequence, the first sequence is a preamble sequence or a synchronization sequence, and the second sequence is used to carry the wake up information. That is, the second sequence is a wake up information sequence.

FIG. 6 is a schematic diagram showing a composition of a wake up signal by taking an example where the first sequence is the synchronization sequence provided in the embodiments of the present application.

In Embodiment 1-2, the target sequence includes a second sequence, and the second sequence is used to carry the wake up information.

For example, as shown in FIG. 7, the wake up signal may include only the wake up information sequence, and exclude the preamble sequence or the synchronization sequence.

That is to say, the wake up information sequence may be used alone as the wake up signal, or may be used together with the preamble sequence or the synchronization sequence as the wake up signal.

In some embodiments, when the terminal device receives the wake up signal including the wake up information sequence, it may be determined that the wake up information is received. Furthermore, the terminal device may wake up the main receiver.

It should be understood that the number of bits of the wake up information is not limited in the present application. For example, the wake up information carried in the wake up signal may contain at least 1 bit of information. By carrying the 1-bit information through the second sequence, the terminal device may perform correlation detection on the second sequence and receive the wake up information more reliably.

In some embodiments, the wake up information carried in the second sequence may be used to wake up one terminal device, or may be used to wake up a plurality of terminal devices, e.g., all terminal devices in a single terminal group.

In some embodiments, the second sequence (i.e., wake up information sequence) is obtained by scrambling a third sequence (also referred to as a feature sequence) using identity (ID) information of the terminal device or ID information of the terminal group.

That is to say, an actual transmitted sequence may be obtained by scrambling the feature sequence using the ID information of the terminal device (e.g., UE ID) or the ID information of the terminal group. That is, the second sequence is carried in the wake up signal to be transmitted. In this way, the terminal device may determine whether the wake up signal is transmitted to itself based on the ID information of the scrambled feature sequence.

In some embodiments, the identity (ID) information of the terminal device may be radio network temporary identity (RNTI) information of the terminal device. For example, for a terminal device in the connected state, the RNTI may be a cell radio network temporary identity (C-RNTI).

In some embodiments, the feature sequence includes M bits, the UE ID includes N bits, and M>N. Any N bits in the M bits are scrambled using the UE ID to obtain an actual transmitted sequence that occupies M bits.

In some embodiments, the wake up information sequence may be generated through the following method that:

it is assumed that the wake up information sequence carried by the WUS is $C_k$, where $k = 0, 1, 2, ..., A-1$, and A is a total length of the sequence;

the feature sequence is $D_k$, where $k = 0, 1, 2, ..., A-1$;

the UE ID is $R_k$, where $k = 0\ 1\ 2, ..., 15$;

$$C_k = D_k,$$

where $k = 0, 1\ 2 ..., A-17$; and

$$C_k = (D_k + R_k) \bmod 2,$$

where $k = A-16, A-15, ..., A-1$.

FIG. 8 is a schematic diagram of generating a wake up information sequence (denoted as sequence 2) by taking an example where sequence 1 is a feature sequence.

That is, the last 16 bits of the 32-bit sequence 1 are scrambled using 16-bit RNTI to obtain a new 32-bit sequence 2, which is used as the actual transmitted sequence, i.e., sequence 2.

In some embodiments, the third sequence is predefined, or configured by the network device, or determined according to a preset rule. That is to say, the terminal device and the network device have a consistent understanding of the third sequence.

Optionally, in a case where the terminal device is in the connected state, the third sequence may be configured by the network device, for example, may be configured through a radio resource control (RRC) signaling or system information. Optionally, in a case where the terminal device is in an idle state or an inactive state, the third sequence may be determined according to the preset rule.

In some embodiments, the third sequence is determined by the terminal device from a first candidate sequence set.

In some embodiments, the first candidate sequence set includes at least one candidate third sequence.

Optionally, each candidate third sequence in the first candidate sequence set corresponds to one number or an index. For example, the first candidate sequence set includes 8 candidate third sequences, and the corresponding numbers or indexes may be 0 to 7 or 1 to 8, respectively.

In some embodiments, the third sequence is determined from the first candidate sequence set according to the ID information of the terminal device.

For example, a feature sequence corresponding to the UE may be calculated according to the UE ID. As an example, a result obtained by taking the modulus of the number of sequences in the first candidate sequence set through the UE ID is used to determine a target third sequence. For example, the obtained result may be the number or index of the target third sequence in the first candidate sequence set. The method is advantageous for distributing the feature sequences corresponding to different terminal devices to the feature sequences in the first candidate sequence set in a relatively even manner.

In some embodiments, the first candidate sequence set is configured by the network device, or is predefined. For example, the first candidate sequence set may be configured through the RRC signaling or system information.

In some embodiments, different terminal devices correspond to different third sequences.

In some embodiments, different terminal groups correspond to different third sequences.

That is, the third sequence is configured for each terminal device, or the third sequence is configured for each terminal group.

In other words, different terminal devices or terminal groups may be distinguished according to the third sequences.

For example, the network device may configure different third sequences for different terminal devices.

For another example, the network device may configure different third sequences for different terminal groups. Each terminal group uses the same third sequence, and different second sequences are formed by scrambling different UE IDs in the third sequence, and correspond to the wake up information of different terminal devices.

In some other embodiments, different terminal devices correspond to the same third sequence. In this case, the third sequence may be scrambled using the ID information of different terminal devices to obtain different second sequences for distinguishing different terminal devices, or different terminal devices may be distinguished by different preamble sequences or synchronization sequences.

In some other embodiments, different terminal groups correspond to the same third sequence. In this case, the third sequence may be scrambled using the ID information of different terminal groups to obtain different second sequences for distinguishing different terminal groups, or different terminal groups may be distinguished by different preamble sequences or synchronization sequences.

In some embodiments, the third sequences adopted by different terminal devices or terminal groups are generated based on different sequences, or the third sequences adopted by different terminals or terminal groups are generated based on different cyclic shifts (CSs) of the same sequence.

In some embodiments, the first sequence is predefined, or configured by the network device, or determined according to a preset rule. That is to say, the terminal device and the network device have a consistent understanding of the first sequence.

Optionally, in a case where the terminal device is in the connected state, the first sequence may be configured by the network device, for example, by the RRC signaling or system information. Optionally, in a case where the terminal device is in the idle state or the inactive state, the first sequence may be determined according to the preset rule.

For example, the first sequence may adopt a predefined sequence W containing 32 bits, and

$$W = [1\ 0\ 1\ 0\ 0\ 1\ 0\ 0\ 1\ 0\ 1\ 1\ 1\ 0\ 1\ 1\ 0\ 0\ 0\ 1\ 0\ 1\ 1\ 1\ 0\ 0\ 1\ 1\ 1\ 0\ 0\ 0].$$

In some embodiments, different first sequences may be adopted by different terminal devices or terminal groups.

For example, the first sequences adopted by the different terminal devices or terminal groups are generated based on different sequences, or the first sequences adopted by different terminals or terminal groups are generated based on different cyclic shifts of the same sequence.

In some other embodiments, the same first sequence may be adopted by different terminal devices or terminal groups. Furthermore, different terminal devices or different terminal groups may be distinguished by second sequences.

In some embodiments, the first sequence is determined by the terminal device from a second candidate sequence set.

In some embodiments, the second candidate sequence set includes at least one candidate first sequence.

Optionally, each candidate first sequence in the second candidate sequence set corresponds to one number or index. For example, the second candidate sequence set includes 8 candidate first sequences, and the corresponding numbers or indexes may be 0 to 7 or 1 to 8, respectively.

In some embodiments, the first sequence is determined from the second candidate sequence set according to the ID information of the terminal device.

For example, the first sequence corresponding to the UE is calculated according to the UE ID. As an example, a result obtained by taking the modulus of the number of sequences in the second candidate sequence set through the UE ID is used to determine a target first sequence. For example, the obtained result may be the number or index of the target first sequence in the second candidate sequence set. This method is advantageous for distributing the first sequences corresponding to different terminal devices to the first sequences in the second candidate sequence set in a relatively even manner.

In some embodiments, the second candidate sequence set is configured by the network device, or is predefined. For example, the second candidate sequence set may be configured through the RRC signaling or system information.

In summary, for Embodiment 1-1, different terminal devices or terminal groups may be distinguished based on the first sequences and/or the second sequences.

For example, different terminal devices or terminal groups correspond to different preamble sequences or synchronization sequences.

For another example, the different terminal devices or terminal groups correspond to different wake up information sequences.

For Embodiment 1-2, different terminal devices or terminal groups may be distinguished based on the second sequences.

In some embodiments, different wake up information sequences corresponding to different terminal devices or terminal groups may be implemented through the following methods (applicable to Embodiment 1-1 and Embodiment 1-2) that:

different terminal devices or terminal groups correspond to different feature sequences; and/or
the wake up information sequences corresponding to different terminal devices or terminal groups are scrambled based on different UE IDs or terminal group IDs; and in this case, the feature sequences corresponding to different terminal devices or terminal groups may be the same or different.

In Embodiment 2, the wake up signal includes the wake up information. In other words, the wake up signal includes explicit wake up information.

In some embodiments, the wake up signal may include the wake up information itself, or may include information bits obtained by encoding the wake up information. By carrying the wake up information in this manner, it is beneficial to improve the transmission reliability. Optionally, the encoding method may include, but is not limited to, reverse non-return-to-zero (NRZ) encoding, Manchester encoding, unipolar return-to-zero encoding, differential bi-phase (DBP) encoding, differential encoding, pulse interval encoding (PIE), bidirectional space encoding (FM0), Miller encoding differential encoding.

For example, in the Manchester encoding, if the wake up information is 0, it is coded as 10; or if the wake up information is 1, it is coded as 01. In this case, the wake up signal carries the encoded wake up information.

The description is made below by taking an example where the wake up information in the wake up signal is the wake up information before encoding, but the present application is not limited thereto.

In some embodiments, the target sequence includes the first sequence that is the preamble sequence or the synchronization sequence; and the wake up signal further includes target wake up information, and the target wake up information includes wake up information of at least one terminal device, or wake up information of at least one terminal group, or wake up information of at least one terminal subgroup in a single terminal group.

In some embodiments, the single terminal group may include a plurality of terminal subgroups, and a single terminal subgroup may include one or more terminal devices.

That is, the wake up signal may indicate wake up information at the granularity of the terminal device, wake up information at the granularity of the terminal group, or wake up information at the granularity of the terminal subgroup.

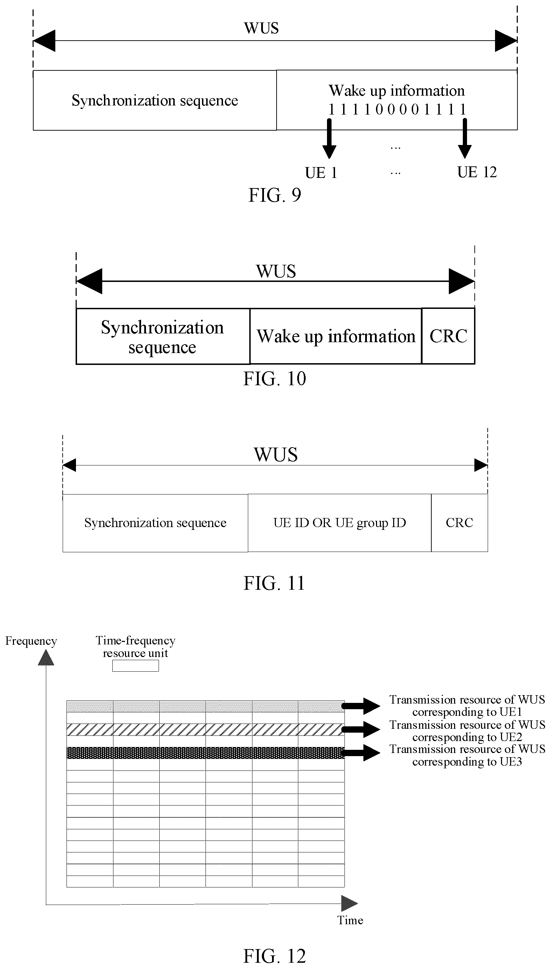

FIG. 9 is a schematic diagram showing a composition of another wake up signal by taking an example where the first sequence is the synchronization sequence provided in the embodiments of the present application.

As shown in FIG. 9, the wake up signal may include the synchronization sequence and the target wake up information.

In some embodiments, whether to wake up the at least one terminal device or the at least one terminal group or the at least one terminal subgroup may be indicated in a bitmap manner.

For example, the target wake up information includes a plurality of bit groups, each bit group corresponds to one terminal device or one terminal group or one terminal subgroup, a value of each bit group is used to indicate whether to wake up the corresponding terminal device or terminal group or terminal subgroup, and each bit group includes one or more bits. For example, a bit group includes one bit, the value of the bit is 1, which indicates "wake up", and the value of the bit is 0, which indicates "not wake up".

As shown in FIG. 9, the target wake up information may include 12 bits, the 12 bits may correspond to 12 UEs, each bit corresponds to one UE, and the value of each bit is used to indicate whether to wake up the corresponding UE.

In some embodiments, the wake up signal further includes check bit information for checking the target wake up information.

For example, the wake up signal may further include cyclical redundancy check (CRC) information, the CRC information is obtained by performing CRC calculation on the target wake up information. By setting the CRC information and the target wake up information in the wake up signal and transmitting them together, the terminal device that receives the wake up signal may perform a CRC check on the target wake up information based on the CRC information to determine whether the received target wake up information is correct.

FIG. 10 is a schematic diagram showing information composition of yet another wake up signal by taking an example where the first sequence is the synchronization sequence provided in the embodiments of the present application. As shown in FIG. 10, the wake up signal may include the synchronization sequence, the target wake up information, and the CRC information.

In some embodiments, a bit location occupied by the wake up information of each terminal device in the at least one terminal device in the target wake up information is configured by the network device, or determined according to a preset rule. That is, the terminal device and the network device have a consistent understanding of the bit location occupied by the wake up information of the terminal device in the target wake up information.

For example, a correspondence between the wake up information of each terminal device and the one or more bits may be configured by the network device, or determined according to the preset rule.

Optionally, the correspondence between the wake up information of each terminal device and the one or more bits may be configured through the RRC signaling or system information.

For another example, a bit location occupied by the wake up information of the at least one terminal device in a target wake up signal is determined according to the ID information of the at least one terminal device.

As an example, a result obtained by taking the modulus of the number of bits (or the number of bit groups) contained in the target wake up information carried in the wake up signal through the UE ID is used to determine the bit location of the wake up information corresponding to the UE in the target wake up information carried in the wake up signal. For example, the obtained result may be used to represent a bit number or index occupied by the wake up information corresponding to the UE in the target wake up information. In this way, the wake up information corresponding to different terminal devices is distributed relatively evenly to bits of the wake up information carried in the wake up signal.

In some embodiments, a bit location occupied by the wake up information of each terminal group in the at least one terminal group in the target wake up information is configured by the network device, or is determined according to a preset rule. That is, the terminal device and the network device have a consistent understanding of the bit location occupied by the wake up information of the terminal group in the target wake up information.

For example, the wake up information of each terminal group corresponds to one or more bits in the target wake up information, and a correspondence between the wake up information of each terminal group and the one or more bits may be configured by the network device, or determined according to the preset rule.

Optionally, the correspondence between the wake up information of each terminal group and the one or more bits may be configured through the RRC signaling or system information.

For another example, a bit location occupied by the wake up information of the at least one terminal group in the target wake up signal is determined according to the ID information of the at least one terminal group.

As an example, a result obtained by taking the modulus of the number of bits (or the number of bit groups) contained in the target wake up information carried in the wake up signal through the ID of the terminal group is used to determine the bit location of the wake up information corresponding to the terminal group in the target wake up information carried in the wake up signal. For example, the obtained result may be used to represent the bit number or index occupied by the wake up information corresponding to the terminal group in the target wake up information. In this way, the wake up information corresponding to different terminal groups is distributed relatively evenly to bits of the wake up information carried in the wake up signal.

In some embodiments, a bit location occupied by the wake up information of each terminal subgroup in the at least one terminal subgroup in the target wake up information is configured by the network device, or is determined according to a preset rule. That is, the terminal device and the network device have a consistent understanding of the bit location occupied by the wake up information of the terminal subgroup in the target wake up information.

For example, the wake up information corresponding to each terminal subgroup corresponds to one or more bits in the target wake up information, and a correspondence between the wake up information of each terminal subgroup and the one or more bits may be configured by the network device, or determined according to the preset rule.

Optionally, the correspondence between the wake up information of each terminal subgroup and the one or more bits may be configured through the RRC signaling or system information.

For another example, the bit location occupied by the wake up information corresponding to each terminal subgroup in the target wake up information may be determined according to the number or index of the terminal subgroup in the terminal group.

For example, a terminal group includes 12 terminal subgroups numbered 0 to 11; and in a case where the target wake up information includes 12 bits (B0 to B11), B0 to B11 correspond to the terminal subgroups numbered 0 to 11, respectively.

Optionally, in Embodiment 2, the first sequence is predefined, or configured by the network device, or determined according to the preset rule. For example, the first sequence may be configured through the RRC signaling or system information.

For example, the first sequence may adopt a predefined sequence W containing 32 bits, and

$$W = [1\ 0\ 1\ 0\ 0\ 1\ 0\ 0\ 1\ 0\ 1\ 1\ 1\ 0\ 1\ 1\ 0\ 0\ 0\ 1\ 0\ 1\ 1\ 1\ 0\ 0\ 1\ 1\ 1\ 0\ 0\ 0].$$

In Embodiment 3, the wake up signal includes implicit wake up information.

In Embodiment 3, the terminal device, terminal group or terminal subgroup to be woken up may be implicitly indicated.

In some embodiments, the wake up signal includes the first sequence, and ID information of a target terminal, ID information of a target terminal group, or ID information of a target terminal subgroup.

Optionally, the ID information of the target terminal may be used to indicate the target terminal to be woken up, the ID information of the target terminal group may be used to indicate the target terminal group to be woken up, and the ID information of the target terminal subgroup may be used to indicate the target terminal subgroup to be woken up.

In some embodiments, the wake up signal further includes check bit information for checking the ID information of the target terminal to be woken up or the ID information of the target terminal group to be woken up or the ID information of the target terminal subgroup to be woken up.

For example, the wake up signal may further include CRC information, the CRC information is obtained by performing CRC calculation on the ID information of the target terminal, or the ID information of the target terminal group, or the ID information of the target terminal subgroup. By setting the CRC information and the ID information of the target terminal, or the ID information of the target terminal group, or the ID information of the target terminal subgroup in the wake up signal and transmitting them together, the terminal device that receives the wake up signal may perform the CRC check on the ID information of the target terminal, or the ID information of the target terminal group, or the ID information of the target terminal subgroup based on the CRC information to determine whether the received ID information of the target terminal, or the ID information of the target terminal group, or the ID information of the target terminal subgroup is correct.

FIG. 11 is a schematic diagram showing information composition of yet another wake up signal by taking an example where the first sequence is the synchronization sequence provided in the embodiments of the present application.

As shown in FIG. 11, the wake up signal may include the synchronization sequence, a UE identity or UE group identity, and the CRC information.

Optionally, in Embodiment 3, the first sequence is predefined, or configured by the network device, or determined according to the preset rule. For example, the first sequence may be configured through the RRC signaling or system information.

For example, the first sequence may adopt a predefined sequence W containing 32 bits, and

$$W = [1\ 0\ 1\ 0\ 0\ 1\ 0\ 0\ 1\ 0\ 1\ 1\ 1\ 0\ 1\ 1\ 0\ 0\ 0\ 1\ 0\ 1\ 1\ 1\ 0\ 0\ 1\ 1\ 1\ 0\ 0\ 0].$$

In Embodiment 4, different terminal devices or terminal groups are distinguished by transmission resources.

In some embodiments, transmission resources of wake up signals corresponding to different terminal devices are different.

That is to say, the wake up signals for different terminal devices may be transmitted using different transmission resources.

In some embodiments, transmission resources of wake up signals corresponding to different terminal groups are different.

That is to say, the wake up signals for different terminal groups may be transmitted using different transmission resources.

Correspondingly, for different terminal devices or terminal devices belonging to different terminal groups, the wake up signals may be detected on the respective transmission resources.

In some embodiments, the transmission resource may refer to any transmission resource of a signal, for example, may include a time domain resource and/or a frequency domain resources, or may include any other transmission resource, such as a code domain resource.

For example, frequency domain resources of the wake up signals corresponding to different terminal devices or terminal groups are different.

For another example, time-frequency resources of the wake up signals corresponding to different terminal devices or terminal groups are different.

In some embodiments, the transmission resources of the wake up signals corresponding to different terminal devices are configured by the network device, or determined according to a preset rule. For example, the transmission resources may be configured through the RRC signaling or system information. In other words, the terminal device and the network device have a consistent understanding of a location of the transmission resource corresponding to the wake up signal.

In some embodiments, the transmission resources of the wake up signals corresponding to different terminal groups are configured by the network device, or determined according to a preset rule. For example, the transmission resources may be configured through the RRC signaling or system information. In other words, the terminal device and the network device have a consistent understanding of the location of the transmission resource corresponding to the wake up signal.

By taking an example where the transmission resource is the frequency domain resource, the wake up signals of different terminal devices or terminal groups may be configured to correspond to different frequency domain resources. Accordingly, the different terminal devices or terminal groups detect the wake up signals on the different frequency domain resources to obtain the wake up information. As shown in FIG. 12, wake up signals corresponding to UE1, UE2 and UE3 are configured on different frequency domain resources, respectively. Accordingly, the UE1, UE2 and UE3 detect the wake up signals on the different frequency domain resources.

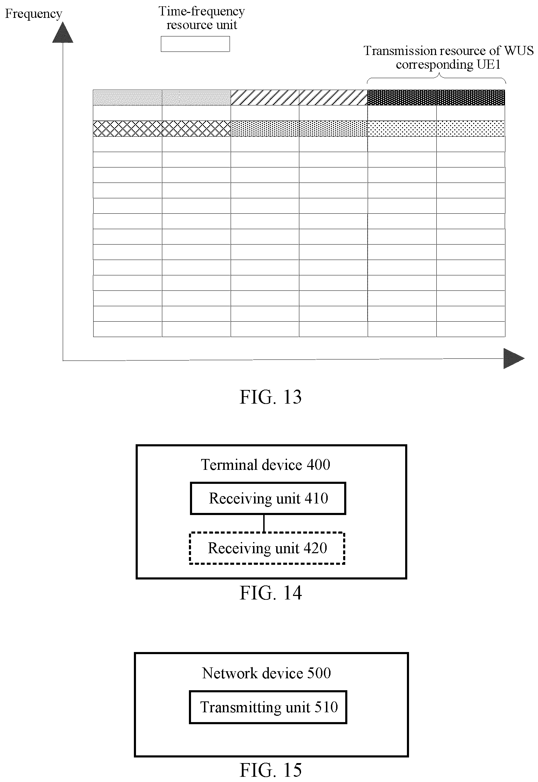

By taking an example where the transmission resource is the time-frequency resource, the wake up signals of different terminal devices or terminal groups may be configured to correspond to different time-frequency resources. Accordingly, the different terminal devices or terminal groups detect the wake up signals on the different time-frequency resources to obtain the wake up information. As shown in FIG. 13, wake up signals corresponding to UE1, UE2 and UE3 are configured on different time-frequency resources, respectively. Accordingly, the UE1, UE2 and UE3 detect the wake up signals on the different time-frequency resources.

It should be understood that, in the embodiments of the present application, the wake up information of different terminal devices or terminal groups may be distinguished only by the transmission resources, or the wake up information of different terminal devices or terminal groups may be distinguished only by sequences (such as preamble sequences, synchronization sequences, or feature sequences), or the wake up information of different terminal devices or terminal groups may be distinguished by transmission resources and sequences.

For example, the wake up signals corresponding to different terminal devices or terminal groups are distinguished through two dimensions: frequency domain resources and feature sequences. For example, on the same frequency domain resource, wake up signals transmitted using different third sequences or first sequences correspond to different terminal devices or terminal groups. Optionally, the third sequence may be the third sequence in Embodiment 1, and the first sequence may be the first sequence in Embodiment 2.

For another example, the wake up signals corresponding to different terminal devices or terminal groups are distinguished through three dimensions: time domain resources, frequency domain resources, and feature sequences. For example, on the same time-frequency resource, wake up signals transmitted using different third sequences or first sequences correspond to different terminal devices or terminal groups. Optionally, the third sequence may be the third sequence in Embodiment 1, and the first sequence may be the first sequence in Embodiment 2.

In some embodiments, if the transmission resource of the wake up signal is for the terminal device or the terminal group, the wake up signal may not include the ID information of the terminal device or the ID information of the terminal group. In a case where the terminal device receives the wake up signal on the corresponding transmission resource, it may be determined that the wake up signal contains its own wake up information. Furthermore, the terminal device may wake up the main receiver according to the wake up information.

Based on Embodiments 1 to 4, different terminal devices or terminal groups may be distinguished by the transmission resources of the wake up signals, and/or different terminal devices or terminal groups may be distinguished by different third sequences or first sequences.

Optionally, in a case where the terminal devices are in the connected state, the transmission resources of the wake up signals corresponding to different terminal devices may be configured by the network device, for example, may be configured through the RRC signaling or system information. Optionally, in a case where the terminal devices are in the idle state or the inactive state, the transmission resources of the wake up signals corresponding to different terminal devices may be determined according to a preset rule.

Optionally, in a case where the terminal devices are in the connected state, the transmission resources of the wake up signals corresponding to different terminal groups may be configured by the network device, for example, may be configured through the RRC signaling or system information. Optionally, in a case where the terminal devices are in the idle state or the inactive state, the transmission resources of the wake up signals corresponding to different terminal groups may be determined according to a preset rule.

In some embodiments, the transmission resource of the wake up signal corresponding to the terminal device is determined from a candidate wake up signal transmission resource set according to a preset rule.

In some embodiments, the candidate wake up signal transmission resource set may include at least one candidate wake up signal transmission resource.

Optionally, each candidate wake up signal transmission resource in the candidate wake up signal transmission resource set corresponds to one number or index. For example, the candidate wake up signal transmission resource set includes 8 candidate wake up signal transmission resources, and the corresponding numbers or indexes may be 0 to 7 or 1 to 8, respectively.

In some embodiments, the transmission resources of the wake up signals corresponding to different terminal devices are determined according to the ID information of the terminal devices.

For example, the result obtained by taking the modulus of the number of transmission resources in the candidate wake up signal transmission resource set through the UE ID is used to determine the location of a target transmission resource. For example, the obtained result may be the number or index of the target transmission resource in the candidate wake up signal transmission resource set. In this way, the transmission resources of the wake up signals corresponding to different terminal devices may be distributed relatively evenly to the transmission resources in the candidate wake up signal transmission resource set.

It should be understood that, the transmission resource of the wake up signal corresponding to the terminal group may be determined in a similar manner as the above, which will not be repeated here for the sake of brevity.

In some embodiments, the candidate wake up signal transmission resource set is configured by the network device, or is predefined. For example, the candidate wake up signal transmission resource set may be configured through the RRC signaling or system information.

Optionally, in some embodiments, the transmission resource for transmitting the wake up signal may be a dedicated transmission resource. That is, the terminal device may determine that a received signal is the wake up signal based on the transmission resource. In this case, optionally, the wake up signal may not include the preamble sequence for identifying the wake up signal.

It should be understood that, Embodiment 4 may be implemented alone, or may be implemented in combination with any one of Embodiments 1 to 3, and the present application does not limit these.

In some embodiments, Embodiment 4 may be implemented in combination with Embodiment 2. For example, in Embodiment 4, the transmission resources of the wake up signals corresponding to different terminal groups are different. That is, the terminal group corresponding to the wake up signal may be determined by the transmission resource. Furthermore, in Embodiment 2, different bits in the target wake up information in the wake up signal may correspond to different terminal devices or terminal subgroups, and the wake up information corresponding to different terminal devices or different terminal subgroups in the terminal group may be determined based on the target wake up information.

In some embodiments, Embodiment 4 may also be implemented in combination with Embodiment 3. For example, in Embodiment 4, the transmission resources of the wake up signals corresponding to different terminal groups are different. That is, the terminal group corresponding to the wake up signal may be determined by the transmission resource. Furthermore, in Embodiment 3, the wake up signal may include the identity information of the terminal device or terminal subgroup in the terminal group, which indicates the terminal device or terminal subgroup to be woken up in the terminal group.

In summary, in the embodiments of the present application, the network device may transmit the wake up signal to the terminal device, the wake up signal includes the target sequence, and the target sequence is used for identifying the wake up signal and/or synchronizing and/or carrying the wake up information. Furthermore, the terminal device may wake up the main receiver with relatively high power consumption based on the wake up signal to receive signals, which is beneficial to reducing the power consumption of the terminal device.

In some implementations, the wake up information may be carried by the sequence. In this case, the wake up signal may include the preamble sequence or the synchronization sequence, or may not include the preamble sequence or the synchronization sequence.

In some implementations, the wake up signal includes the preamble sequence or the synchronization sequence, and the target wake up information, and the target wake up information may include wake up information of a plurality of terminal devices or a plurality of terminal groups. The bit locations occupied by the wake up information of different terminal devices or terminal groups in the target wake up information may be configured by the network device, or determined according to the preset rule.

In some implementations, the wake up signal may include the preamble sequence or the synchronization sequence, and the identity information of the terminal device or terminal group to be woken up.

In some implementations, the wake up signals of different terminal devices or terminal groups may correspond to different transmission resources, for example, correspond to different frequency domain resources, or correspond to different time-frequency resources.

In some embodiments, different terminal devices or terminal groups may be distinguished by different preamble sequences or synchronization sequences, or different terminal devices or terminal groups may be distinguished by different feature sequences, or different terminal devices or terminal groups may be distinguished by scrambling the feature sequence using the ID information of the terminal devices or the ID information of the terminal groups.

The method embodiments of the present application are described in detail above in combination with FIGS. 2 to 13. Apparatus embodiments of the present application will be described in detail below in combination with FIGS. 14 to 18. It should be understood that, the apparatus embodiments and the method embodiments correspond to each other, and for similar descriptions, reference may be made to the method embodiments.

FIG. 14 shows a schematic block diagram of a terminal device 400 according to the embodiments of the present application. As shown in FIG. 14, the terminal device 400 includes:

a receiving unit 410, configured to receive a wake up signal including a target sequence, where the target sequence is used for at least one of: identifying the wake up signal, synchronizing, and carrying wake up information, and the wake up signal is used to wake up one or more terminal devices.

In some embodiments, the target sequence includes a first sequence and a second sequence, the first sequence is a preamble sequence or a synchronization sequence, and the second sequence is used to carry the wake up information; or

the target sequence includes a second sequence, and the second sequence is used to carry the wake up information.

In some embodiments, the second sequence is obtained by scrambling a third sequence using identity (ID) information of the terminal device or ID information of a terminal group to which the terminal device belongs.

In some embodiments, the third sequence is predefined, or configured by a network device, or determined according to a preset rule.

In some embodiments, the third sequence is determined by the terminal device from a first candidate sequence set.

In some embodiments, the third sequence is determined from the first candidate sequence set according to the identity (ID) information of the terminal device.

In some embodiments, the first candidate sequence set is configured by the network device, or is predefined.

In some embodiments, different terminal devices correspond to different third sequences; or different terminal groups correspond to different third sequences.

In some embodiments, the target sequence includes the first sequence, and the first sequence is the preamble sequence or the synchronization sequence; and the wake up signal further includes target wake up information, and the target wake up information includes wake up information of at least one terminal device, or wake up information of at least one terminal group, or wake up information of at least one terminal subgroup in a single terminal group.

In some embodiments, the wake up signal further includes check bit information for checking the target wake up information.

In some embodiments, the target wake up information indicates whether to wake up the at least one terminal device or the at least one terminal group or the at least one terminal subgroup in a bitmap manner.

In some embodiments, the target wake up information includes a plurality of bit groups, each bit group corresponds to one terminal device or one terminal group or one terminal subgroup, and a value of each bit group is used to indicate whether to wake up the corresponding terminal device or terminal group or terminal subgroup. Each bit group includes one or more bits.

In some embodiments, a bit location occupied by wake up information of each terminal device in the at least one terminal device in the target wake up information is configured by the network device, or is determined according to a preset rule; or

a bit location occupied by wake up information of each terminal group in the at least one terminal group in the target wake up information is configured by the network device, or is determined according to a preset rule; or

a bit location occupied by wake up information of each terminal subgroup in the at least one terminal subgroup in the target wake up information is configured by the network device, or is determined according to a preset rule.

In some embodiments, a bit location occupied by the wake up information of the at least one terminal device in a target wake up signal is determined according to ID information of the at least one terminal device; or

a bit location occupied by the wake up information of the at least one terminal group in the target wake up signal is determined according to the ID information of the at least one terminal device.

In some embodiments, the wake up signal includes ID information of a target terminal to be woken up or ID information of a target terminal group to be woken up or ID information of a target terminal subgroup to be woken up.

In some embodiments, the wake up signal further includes check bit information for checking the ID information of the target terminal to be woken up or the ID information of the target terminal group to be woken up or the ID information of the target terminal subgroup to be woken up.

In some embodiments, different terminal devices correspond to different first sequences; or different terminal groups correspond to different first sequences.

In some embodiments, transmission resources of wake up signals corresponding to different terminal devices are different; or

transmission resources of wake up signals corresponding to different terminal groups are different.

In some embodiments, a transmission resource includes at least one of the following:

a time domain resource, or a frequency domain resource.

In some embodiments, the transmission resources of the wake up signals corresponding to different terminal devices are configured by the network device, or determined according to a preset rule; or

the transmission resources of the wake up signals corresponding to different terminal groups are configured by the network device, or determined according to a preset rule.

In some embodiments, a transmission resource of the wake up signal corresponding to the terminal device is determined from a candidate wake up signal transmission resource set according to a preset rule.

In some embodiments, the candidate wake up signal transmission resource set is configured by the network device, or is predefined.

In some embodiments, the transmission resources of the wake up signals corresponding to different terminal devices are determined according to ID information of the terminal devices.

In some embodiments, the terminal device further includes a receiving unit 420; power consumption of the receiving unit 410 is lower than power consumption of the receiving unit 420, and the wake up signal is used to wake up the receiving unit 420.

Optionally, in some embodiments, the above receiving units may be communication interfaces or receivers, or input/output interfaces of a communication chip or system on a chip.

It should be understood that, the terminal device 400 according to the embodiments of the present application may correspond to the terminal device in the method embodiments of the present application, and the above-mentioned and other operations and/or functions of various units in the terminal device 400 are for implementing corresponding processes of the terminal device in the method shown in FIGS. 2 to 13, which will not be repeated here for the sake of brevity.

FIG. 15 shows a schematic block diagram of a network device 500 according to the embodiments of the present application. As shown in FIG. 15, the network device 500 includes:

a transmitting unit 510, configured to transmit a wake up signal including a target sequence, where the target sequence is used for at least one of: identifying the wake up signal, synchronizing, and carrying wake up information, and the wake up signal is used to wake up one or more terminal devices.

In some embodiments, the target sequence includes a first sequence and a second sequence, the first sequence is a preamble sequence or a synchronization sequence, and the second sequence is used to carry the wake up information; or

the target sequence includes a second sequence, and the second sequence is used to carry the wake up information.

In some embodiments, the second sequence is obtained by scrambling a third sequence using identity (ID) information of a terminal device to be woken up or identity (ID) information of a terminal group to be woken up.

In some embodiments, the third sequence is predefined, or configured by the network device, or determined according to a preset rule.

In some embodiments, the third sequence is determined from a first candidate sequence set.

In some embodiments, the third sequence is determined from the first candidate sequence set based on the ID information of the terminal device.

In some embodiments, the first candidate sequence set is configured by the network device, or is predefined.

In some embodiments, different terminal devices correspond to different third sequences; or

different terminal groups correspond to different third sequences.

In some embodiments, the target sequence includes a first sequence, the first sequence is the preamble sequence or the synchronization sequence; and the wake up signal further includes target wake up information, and the target wake up information includes wake up information of at least one terminal device, or wake up information of at least one terminal group, or wake up information of at least one terminal subgroup in a single terminal group.

In some embodiments, the wake up signal further includes check bit information for checking the target wake up information.

In some embodiments, the target wake up information indicates whether to wake up the at least one terminal device or the at least one terminal group or the at least one terminal subgroup in a bitmap manner.

In some embodiments, the target wake up information includes a plurality of bit groups, each bit group corresponds to one terminal device or one terminal group or one terminal subgroup, and a value of each bit group is used to indicate whether to wake up the corresponding terminal device or terminal group or terminal subgroup. Each bit group includes one or more bits.

In some embodiments, a bit location occupied by wake up information of each terminal device in the at least one terminal device in the target wake up information is configured by the network device, or is determined according to a preset rule; or

a bit location occupied by wake up information of each terminal group in the at least one terminal group in the target wake up information is configured by the network device, or is determined according to a preset rule; or

a bit location occupied by wake up information of each terminal subgroup in the at least one terminal subgroup in the target wake up information is configured by the network device, or is determined according to a preset rule.

In some embodiments, a bit location occupied by the wake up information of the at least one terminal device in a target wake up signal is determined according to ID information of the at least one terminal device; or

a bit location occupied by the wake up information of the at least one terminal group in the target wake up signal is determined according to the ID information of the at least one terminal device.

In some embodiments, the wake up signal includes ID information of a target terminal to be woken up or ID information of a target terminal group to be woken up or ID information of a target terminal subgroup to be woken up.

In some embodiments, the wake up signal further includes check bit information for checking the ID information of the target terminal to be woken up or the ID information of the target terminal group to be woken up or the ID information of the target terminal subgroup to be woken up.

In some embodiments, different terminal devices correspond to different first sequences; or different terminal groups correspond to different first sequences.

In some embodiments, transmission resources of wake up signals corresponding to different terminal devices are different; or

transmission resources of wake up signals corresponding to different terminal groups are different.

In some embodiments, a transmission resource includes at least one of the following:

a time domain resource, or a frequency domain resource.

In some embodiments, the transmission resources of the wake up signals corresponding to different terminal devices are configured by the network device, or determined according to a preset rule; or

the transmission resources of the wake up signals corresponding to different terminal groups are configured by the network device, or determined according to a preset rule.

In some embodiments, the transmission resource of the wake up signal corresponding to the terminal device is determined from a candidate wake up signal transmission resource set according to a preset rule.

In some embodiments, the candidate wake up signal transmission resource set is configured by the network device, or is predefined.

In some embodiments, the transmission resources of the wake up signals corresponding to different terminal devices are determined according to ID information of the terminal devices.

In some embodiments, the terminal device includes a first receiver and a second receiver; power consumption of the first receiver is lower than power consumption of the second receiver, the wake up signal is received based on the first receiver, and the wake up signal is used to wake up the second receiver.

Optionally, in some embodiments, the above transmitting unit may be a communication interface or a transmitter, or an input/output interface of a communication chip or system on a chip.

It should be understood that, the network device 500 according to the embodiment of the present application may correspond to the network device in the method embodiments of the present application, and the above-mentioned and other operations and/or functions of various units in the network device 500 are for implementing the corresponding processes of the network device in the method shown in FIGS. 2 to 13, which will not be repeated here for the sake of brevity.

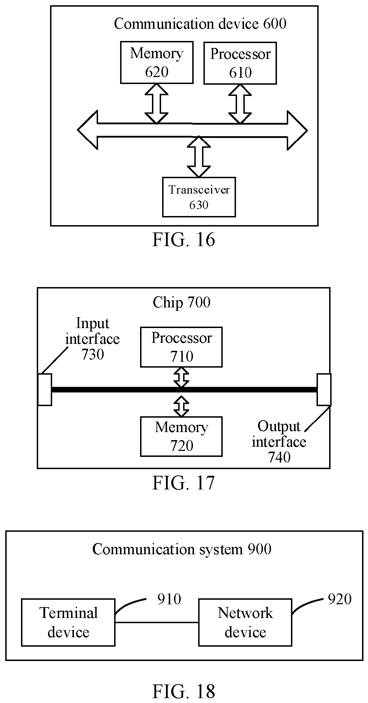

FIG. 16 is a schematic structural diagram of a communication device 600 provided in the embodiments of the present application. The communication device 600 shown in FIG. 16 includes a processor 610, and the processor 610 may invoke a computer program from a memory and run the computer program to implement the method in the embodiments of the present application.

Optionally, as shown in FIG. 16, the communication device 600 may further include a memory 620. The processor 610 may invoke the computer program from the memory 620 and run the computer program to implement the method in the embodiments of the present application.

The memory 620 may be a separate device independent of the processor 610, or may be integrated into the processor 610.

Optionally, as shown in FIG. 16, the communication device 600 may further include a transceiver 630, and the processor 610 may control the transceiver 630 to communicate with other devices. Specifically, the processor 610 may control the transceiver 630 to transmit information or data to other devices, or to receive information or data transmitted by other devices.

The transceiver 630 may include a transmitter and a receiver. The transceiver 630 may further include antennas, and the number of antennas may be one or more.

Optionally, the communication device 600 may specifically be the network device in the embodiments of the present application, and the communication device 600 may implement the corresponding processes implemented by the network device in various methods in the embodiments of the present application, which will not be repeated here for the sake of brevity.

Optionally, the communication device 600 may specifically be a mobile terminal/terminal device in the embodiments of the present application, and the communication device 600 may implement the corresponding processes implemented by the mobile terminal/terminal device in various methods in the embodiments of the present application, which will not be repeated here for the sake of brevity.

FIG. 17 is a schematic structural diagram of a chip according to the embodiments of the present application. The chip 700 shown in FIG. 17 includes a processor 710, and the processor 710 may invoke a computer program from a memory and run the computer program to implement the method in the embodiments of the present application.

Optionally, as shown in FIG. 17, the chip 700 may further include a memory 720. The processor 710 may invoke the computer program from the memory 720 and run the computer program to implement the method in the embodiments of the present application.

The memory 720 may be a separate device independent of the processor 710, or may be integrated into the processor 710.

Optionally, the chip 700 may further include an input interface 730. The processor 710 may control the input interface 730 to communicate with other devices or chips. Specifically, the processor 710 may control the input interface 730 to obtain information or data transmitted by other devices or chips.

Optionally, the chip 700 may further include an output interface 740. The processor 710 may control the output interface 740 to communicate with other devices or chips. Specifically, the processor 710 may control the output interface 740 to output information or data to other devices or chips.

Optionally, the chip may be applied to the network device in the embodiments of the present application, and the chip may implement the corresponding processes implemented by the network device in various methods in the embodiments of the present application, which will not be repeated here for the sake of brevity.

Optionally, the chip may be applied to the mobile terminal/terminal device in the embodiments of the present application, and the chip may implement the corresponding processes implemented by the mobile terminal/terminal device in the various methods in the embodiments of the present application, which will not be repeated here for the sake of brevity.

It should be understood that the chip mentioned in the embodiments of the present application may also be referred to as a system-level chip, a system chip, a chip system or a system-on-chip chip.

FIG. 18 is a schematic block diagram of a communication system 900 provided in the embodiments of the present application. As shown in FIG. 18, the communication system 900 includes a terminal device 910 and a network device 920.

The terminal device 910 may be configured to implement the corresponding functions implemented by the terminal device in the above method, and the network device 920 may be configured to implement the corresponding functions implemented by the network device in the above method, which will not be repeated here for the sake of brevity..

It should be understood that the processor in the embodiments of the present application may be an integrated circuit chip with a capability for processing signals. In an implementation process, various steps of the method embodiments described above may be completed through an integrated logic circuit of hardware in a processor or instructions in a form of software. The above processor may be a general-purpose processor, a digital signal processor (DSP), an application specific integrated circuit (ASIC), a field programmable gate array (FPGA) or another programmable logic device, a discrete gate or transistor logic device, or a discrete hardware component. The processor may implement various methods, steps, and logic block diagrams disclosed in the embodiments of the present application. The general-purpose processor may be a microprocessor, or the processor may be any conventional processor. The steps of the methods disclosed in combination with the embodiments of the present application may be directly embodied by execution of a hardware decoding processor, or by execution of a combination of hardware and software modules in a decoding processor. The software module may be located in a storage medium commonly used in the art, such as a random access memory, a flash memory, a read-only memory, a programmable read-only memory or an electrically erasable programmable memory, or a register. The storage medium is located in a memory, and the processor reads information in the memory and completes the steps of the above methods in combination with hardware of the processor.

It may be understood that, the memory in the embodiments of the present application may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM) or a flash memory. The volatile memory may be a random access memory (RAM), which is used as an external cache. As an example, but not as a limitation, many forms of RAMs are available, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM) and a direct rambus RAM (DR RAM). It should be noted that the memories of the systems and the methods described herein are intended to include, but not limited to, these and any other suitable types of memories.

It should be understood that the above memory is illustrative but not a limitation. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), or the like. That is, the memories in the embodiments of the present application are intended to include, but is not limited to, these and any other suitable types of memories.

The embodiments of the present application also provide a computer-readable storage medium for storing a computer program.

Optionally, the computer-readable storage medium may be applied to the network device in the embodiments of the present application, and the computer program enables a computer to perform the corresponding processes implemented by the network device in the various methods in the embodiments of the present application, which will not be repeated here for the sake of brevity.

Optionally, the computer-readable storage medium may be applied to the mobile terminal/terminal device in the embodiments of the present application, and the computer program enables the computer to perform the corresponding processes implemented by the mobile terminal/terminal device in the various methods in the embodiments of the present application, which will not be repeated here for the sake of brevity.

The embodiments of the present application also provide a computer program product, which includes computer program instructions.

Optionally, the computer program product may be applied to the network device in the embodiments of the present application, and the computer program instructions enable a computer to perform the corresponding processes implemented by the network device in the various methods in the embodiments of the present application, which will not be repeated here for the sake of brevity.

Optionally, the computer program product may be applied to the mobile terminal/terminal device in the embodiments of the present application, and the computer program instructions enable the computer to perform the corresponding processes implemented by the mobile terminal/terminal device in the various methods in the embodiments of the present application, which will not be repeated here for the sake of brevity.

The embodiments of the present application also provide a computer program.

Optionally, the computer program may be applied to the network device in the embodiments of the present application. When run on a computer, the computer program enables the computer to perform the corresponding processes implemented by the network device in the various methods in the embodiments of the present application, which will not be repeated here for the sake of brevity.

Optionally, the computer program may be applied to the mobile terminal/terminal device in the embodiments of the present application. When run on a computer, the computer program enables the computer to perform the corresponding processes implemented by the mobile terminal/terminal device in the various methods in the embodiments of the present application, which will not be repeated here for the sake of brevity.

Those of ordinary skills in the art will recognize that units and algorithm steps of various examples described in combination with the embodiments disclosed herein can be implemented in electronic hardware, or a combination of computer software and electronic hardware. Whether these functions are implemented in a form of hardware or software depends on a specific application and a design constraint of a technical solution. Those skilled in the art may use different methods to implement the described functions for each specific application, but such implementation should not be considered to be beyond the scope of the present application.

It may be clearly understood by those skilled in the art that, for convenience and brevity of the description, the specific working processes of the system, apparatus and unit described above may refer to the corresponding processes in the above method embodiments, which will not be repeated here.

In several embodiments provided in the present application, it should be understood that the disclosed systems, apparatus, and method may be implemented in other ways. For example, the apparatus embodiments described above are only illustrative. For example, division of the units is only a logical function division, and there may be other division methods in an actual implementation. For example, a plurality of units or components may be combined or integrated into another system, or some features may be ignored or not performed. In addition, coupling or direct coupling or communicative connection between each other as shown or discussed may be indirect coupling or communicative connection via some interfaces, apparatuses, or units, which may be electrical, mechanical, or in other forms.

The units described as separate components may be or may not be physically separated, and the components shown as units may be or may not be physical units (that is, they may be located in one place, or may be distributed on a plurality of network units). A part or all of the units may be selected according to actual needs to achieve the purpose of the solutions of the embodiments.

In addition, various functional units in various embodiments of the present application may be integrated into one processing unit, or various units may exist physically separately, or two or more units may be integrated into one unit.

If the described functions are implemented in a form of software functional units and sold or used as an independent product, the functions may be stored in a computer-readable storage medium. With such understanding, the technical solutions of the present application may be embodied in a form of a software product in essence, or a part of the technical solutions that contributes to the prior art or a part of the technical solutions may be embodied in the form of the software product. The computer software product is stored in one storage medium including a plurality of instructions for enabling a computer device (which may be a personal computer, a server, or a network device) to perform all or some of the steps of the methods described in the various embodiments of the present application. The storage medium mentioned above includes various medium capable of storing program codes, such as a U disk, a mobile hard disk, a read-only memory (ROM), a random access memory (RAM), a magnetic disk, and an optical disk.

The foregoing descriptions are merely specific implementations of the present disclosure, but the protection scope of the present application is not limited thereto. Variations or replacements that any person skilled in the art could readily conceive of within the technical scope disclosed in the present application shall be included in the protection scope of the present application. Therefore, the protection scope of the present application should be subject to the protection scope of the claims.

Claims

1.  A wireless communication method, comprising:
    receiving, by a terminal device, a wake up signal comprising a target sequence, wherein the target sequence is used for at least one of: identifying the wake up signal, synchronizing, and carrying wake up information; and the wake up signal is used to wake up one or more terminal devices.

2.  The method according to claim 1, wherein the target sequence comprises a first sequence and a second sequence, the first sequence is a preamble sequence or a synchronization sequence, and the second sequence is used to carry the wake up information; or
    the target sequence comprises a second sequence, and the second sequence is used to carry the wake up information.

3.  The method according to claim 2, wherein the second sequence is obtained by scrambling a third sequence using identity (ID) information of the terminal device or ID information of a terminal group to which the terminal device belongs.

4.  The method according to claim 3, wherein the third sequence is predefined, or configured by a network device, or determined according to a preset rule.

5.  The method according to claim 4, wherein the third sequence is determined by the terminal device from a first candidate sequence set.

6.  The method according to claim 5, wherein the third sequence is determined from the first candidate sequence set according to the identity (ID) information of the terminal device.

7.  The method according to claim 5 or 6, wherein the first candidate sequence set is configured by a network device, or is predefined.

8.  The method according to any one of claims 3 to 7, wherein

    different terminal devices correspond to different third sequences; or
    different terminal groups correspond to different third sequences.

9.  The method according to claim 1, wherein the target sequence comprises a first sequence, the first sequence is a preamble sequence or a synchronization sequence; the wake up signal further comprises target wake up information, and the target wake up information comprises wake up information of at least one terminal device, or wake up information of at least one terminal group, or wake up information of at least one terminal subgroup in a single terminal group.

10. The method according to claim 9, wherein the wake up signal further comprises check bit information for checking the target wake up information.

11. The method according to claim 9 or 10, wherein the target wake up information indicates whether to wake up the at least one terminal device or the at least one terminal group or the at least one terminal subgroup in a bitmap manner.

12. The method according to claim 11, wherein the target wake up information comprises a plurality of bit groups, each bit group corresponds to one terminal device or one terminal group or one terminal subgroup, and a value of each bit group is used to indicate whether to wake up the corresponding terminal device or terminal group or terminal subgroup, wherein each bit group comprises one or more bits.

13. The method according to any one of claims 9 to 12, wherein a bit location occupied by wake up information of each terminal device in the at least one terminal device in the target wake up information is configured by a network device, or is determined according to a preset rule; or

    a bit location occupied by wake up information of each terminal group in the at least one terminal group in the target wake up information is configured by a network device, or is determined according to a preset rule; or
    a bit location occupied by wake up information of each terminal subgroup in the at least one terminal subgroup in the target wake up information is configured by a network device, or is determined according to a preset rule.

14. The method according to claim 13, wherein a bit location occupied by the wake up information of the at least one terminal device in a target wake up signal is determined according to ID information of the at least one terminal device; or
a bit location occupied by the wake up information of the at least one terminal group in the target wake up signal is determined according to the ID information of the at least one terminal device.

15. The method according to claim 1, wherein the wake up signal comprises ID information of a target terminal to be woken up or ID information of a target terminal group to be woken up or ID information of a target terminal subgroup to be woken up.

16. The method according to claim 15, wherein the wake up signal further comprises check bit information for checking the ID information of the target terminal to be woken up or the ID information of the target terminal group to be woken up or the ID information of the target terminal subgroup to be woken up.

17. The method according to any one of claims 2 to 16, wherein

different terminal devices correspond to different first sequences; or
different terminal groups correspond to different first sequences.

18. The method according to any one of claims 1 to 17, wherein

transmission resources of wake up signals corresponding to different terminal devices are different; or
transmission resources of wake up signals corresponding to different terminal groups are different.

19. The method according to claim 18, wherein a transmission resource comprises at least one of the following:
a time domain resource, or a frequency domain resource.

20. The method according to claim 18 or 19, wherein the transmission resources of the wake up signals corresponding to different terminal devices are configured by a network device, or determined according to a preset rule; or
the transmission resources of the wake up signals corresponding to different terminal groups are configured by a network device, or determined according to a preset rule.

21. The method according to claim 20, wherein a transmission resource of the wake up signal corresponding to the terminal device is determined from a candidate wake up signal transmission resource set according to a preset rule.

22. The method according to claim 21, wherein the candidate wake up signal transmission resource set is configured by a network device, or is predefined.

23. The method according to any one of claims 20 to 22, wherein the transmission resources of the wake up signals corresponding to different terminal devices are determined according to ID information of the terminal devices.

24. The method according to any one of claims 1 to 23, wherein the terminal device comprises a first receiver and a second receiver, wherein power consumption of the first receiver is lower than power consumption of the second receiver, the wake up signal is received based on the first receiver, and the wake up signal is used to wake up the second receiver.

25. A wireless communication method, comprising:
transmitting, by a network device, a wake up signal comprising a target sequence, wherein the target sequence is used for identifying the wake up signal, and/or synchronizing, and/or carrying wake up information, and the wake up signal is used to wake up one or more terminal devices.

26. The method according to claim 25, wherein the target sequence comprises a first sequence and a second sequence, the first sequence is a preamble sequence or a synchronization sequence, and the second sequence is used to carry the wake up information; or
the target sequence comprises a second sequence, and the second sequence is used to carry the wake up information.

27. The method according to claim 26, wherein the second sequence is obtained by scrambling a third sequence using identity (ID) information of a terminal device to be woken up or identity (ID) information of a terminal group to be woken up.

28. The method according to claim 27, wherein the third sequence is predefined, or configured by the network device, or determined according to a preset rule.

29. The method according to claim 28, wherein the third sequence is determined from a first candidate sequence set.

30. The method according to claim 29, wherein the third sequence is determined from the first candidate sequence set according to the ID information of the terminal device.

31. The method according to claim 29 or 30, wherein the first candidate sequence set is configured by the network device, or is predefined.

32. The method according to any one of claims 27 to 31, wherein

different terminal devices correspond to different third sequences; or
different terminal groups correspond to different third sequences.

33. The method according to claim 25, wherein the target sequence comprises a first sequence, the first sequence is a preamble sequence or a synchronization sequence; the wake up signal further comprises target wake up information, and the target wake up information comprises wake up information of at least one terminal device, or wake up information of at least one terminal group, or wake up information of at least one terminal subgroup in a single terminal group.

34. The method according to claim 33, wherein the wake up signal further comprises check bit information for checking the target wake up information.

35. The method according to claim 33 or 34, wherein the target wake up information indicates whether to wake up the at least one terminal device or the at least one terminal group or the at least one terminal subgroup in a bitmap manner.

36. The method according to claim 35, wherein the target wake up information comprises a plurality of bit groups, each bit group corresponds to one terminal device or one terminal group or one terminal subgroup, and a value of each bit group is used to indicate whether to wake up the corresponding terminal device or terminal group or terminal subgroup, wherein each bit group comprises one or more bits.

37. The method according to any one of claims 33 to 36, wherein a bit location occupied by wake up information of each terminal device in the at least one terminal device in the target wake up information is configured by the network device, or is determined according to a preset rule; or

a bit location occupied by wake up information of each terminal group in the at least one terminal group in the target wake up information is configured by the network device, or is determined according to a preset rule; or
a bit location occupied by wake up information of each terminal subgroup in the at least one terminal subgroup in the target wake up information is configured by the network device, or is determined according to a preset rule.

38. The method according to claim 37, wherein a bit location occupied by the wake up information of the at least one terminal device in a target wake up signal is determined according to ID information of the at least one terminal device; or
a bit location occupied by the wake up information of the at least one terminal group in the target wake up signal is determined according to the ID information of the at least one terminal device.

39. The method according to claim 25, wherein the wake up signal comprises ID information of a target terminal to be woken up or ID information of a target terminal group to be woken up or ID information of a target terminal subgroup to be woken up.

40. The method according to claim 39, wherein the wake up signal further comprises check bit information for checking the ID information of the target terminal to be woken up or the ID information of the target terminal group to be woken up or the ID information of the target terminal subgroup to be woken up.

41. The method according to any one of claims 26 to 40, wherein

different terminal devices correspond to different first sequences; or
different terminal groups correspond to different first sequences.

42. The method according to any one of claims 25 to 41, wherein

transmission resources of wake up signals corresponding to different terminal devices are different; or
transmission resources of wake up signals corresponding to different terminal groups are different.

43. The method according to claim 42, wherein a transmission resource comprises at least one of the following:
a time domain resource, or a frequency domain resource.

44. The method according to claim 42 or 43, wherein the transmission resources of the wake up signals corresponding to
different terminal devices are configured by the network device, or determined according to a preset rule; or
the transmission resources of the wake up signals corresponding to different terminal groups are configured by the
network device, or determined according to a preset rule.

45. The method according to claim 44, wherein a transmission resource of the wake up signal corresponding to a terminal
device is determined from a candidate wake up signal transmission resource set according to a preset rule.

46. The method according to claim 45, wherein the candidate wake up signal transmission resource set is configured by
the network device, or is predefined.

47. The method according to any one of claims 44 to 46, wherein the transmission resources of the wake up signals
corresponding to different terminal devices are determined according to ID information of the terminal devices.

48. The method according to any one of claims 25 to 47, wherein the terminal device comprises a first receiver and a
second receiver, wherein power consumption of the first receiver is lower than power consumption of the second
receiver, the wake up signal is received based on the first receiver, and the wake up signal is used to wake up the
second receiver.

49. A terminal device, comprising
a receiving unit, configured to receive a wake up signal comprising a target sequence, wherein the target sequence is
a preamble sequence or a synchronization sequence, or the target sequence is used to carry wake up information; and
the wake up signal is used to wake up one or more terminal devices.

50. A network device, comprising
a transmitting unit, configured to transmit a wake up signal comprising a target sequence, wherein the target sequence
is a preamble sequence or a synchronization sequence, or the target sequence is used to carry wake up information;
and the wake up signal is used to wake up one or more terminal devices.

51. A terminal device, comprising a processor and a memory, wherein the memory is configured to store a computer
program, and the processor is configured to invoke and run the computer program stored in the memory to perform the
method according to any one of claims 1 to 24.

52. A network device, comprising a processor and a memory, wherein the memory is configured to store a computer
program, and the processor is configured to invoke and run the computer program stored in the memory to perform the
method according to any one of claims 25 to 48.

53. A chip, comprising a processor, configured to invoke a computer program from a memory and run the computer
program, so as to enable a device equipped with the chip to perform the method according to any one of claims 1 to 24,
or perform the method according to any one of claims 25 to 48.

54. A computer-readable storage medium for storing a computer program, wherein the computer program enables a
computer to perform the method according to any one of claims 1 to 24, or perform the method according to any one of claims 25 to 48.

55. A computer program product, comprising computer program instructions, wherein the computer program instructions enable a computer to perform the method according to any one of claims 1 to 24, or perform the method according to any one of claims 25 to 48.

56. A computer program, wherein the computer program enables a computer to perform the method according to any one of claims 1 to 24, or perform the method according to any one of claims 25 to 48.

**100**

110

120

120

FIG. 1

200

| Terminal device | | Network device |
|---|---|---|

S210, a wake up signal including a target sequence, where the target sequence is a preamble sequence or a synchronization sequence, or the target sequence is used for carrying wake up information

FIG. 2

Wake up signal

Terminal device

Main receiver

Wake up information

Wake up receiver

FIG. 3

Wake up signal

Terminal device

Wake up receiver

Wake up information

Main receiver

FIG. 4

WUR

On-WG

Bit '1'

Off-WG

Bit '0'

Window

Analog and RF

FIG. 5

| Synchronization sequence | Wake up information sequence |
|---|---|

WUS

FIG. 6

| Wake up information sequence |
|---|

WUS

FIG. 7

Sequence 1 = [1 0 1 0 0 1 0 0 1 0 1 1 1 0 1 1 0 0 0 1 0 1 1 1 0 0 1 1 1 0 0 0]

(+)

UE ID = [1 0 1 1 0 0 1 1 0 1 0 0 1 0 1 1]

Sequence 2 = [1 0 1 0 0 1 0 0 1 0 1 1 1 0 1 1 1 0 1 0 0 1 0 0 0 1 1 1 0 0 1 1]

FIG. 8

WUS

| Synchronization sequence | Wake up information<br>1 1 1 1 0 0 0 0 1 1 1 1 |
|---|---|

UE 1      ...      UE 12

FIG. 9

WUS

| Synchronization<br>sequence | Wake up information | CRC |
|---|---|---|

FIG. 10

WUS

| Synchronization sequence | UE ID OR UE group ID | CRC |
|---|---|---|

FIG. 11

Frequency

Time-frequency
resource unit

Transmission resource of WUS
corresponding to UE1
Transmission resource of WUS
corresponding to UE2
Transmission resource of WUS
corresponding to UE3

Time

FIG. 12

Frequency

Time-frequency
resource unit

Transmission resource of WUS
corresponding UE1

FIG. 13

Terminal device 400

Receiving unit 410

Receiving unit 420

FIG. 14

Network device 500

Transmitting unit 510

FIG. 15

Communication device 600

Memory
620

Processor
610

Transceiver
630

FIG. 16

Chip 700

Input
interface
730

Processor
710

Memory
720

Output
interface
740

FIG. 17

Communication system 900

Terminal
device

910

Network
device

920

FIG. 18

## INTERNATIONAL SEARCH REPORT

| International application No. |
| --- |
| **PCT/CN2022/095566** |

**A. CLASSIFICATION OF SUBJECT MATTER**

H04W52/02(2009.01)i

According to International Patent Classification (IPC) or to both national classification and IPC

**B. FIELDS SEARCHED**

Minimum documentation searched (classification system followed by classification symbols)

H04W H04L

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; 3GPP: 功耗, 唤醒, 网络, 终端, 序列, 校验, 验证, 同步, terminal, up, wake, WUS, network, sequence, checkout, synchronization, UE, MS, phone, client

**C. DOCUMENTS CONSIDERED TO BE RELEVANT**

| Category* | Citation of document, with indication, where appropriate, of the relevant passages | Relevant to claim No. |
| --- | --- | --- |
| X | CN 110754120 A (SONY CORP. et al.) 04 February 2020 (2020-02-04) description, paragraphs 18-70, and figures 1-5 | 1-56 |
| X | CN 111542102 A (HUNAN CITY UNIVERSITY) 14 August 2020 (2020-08-14) description, paragraphs 5-33, and figure 1 | 1-56 |
| A | CN 104796973 A (TP-LINK TECHNOLOGIES CO., LTD.) 22 July 2015 (2015-07-22) entire document | 1-56 |
| A | WO 2020075930 A1 (LG ELECTRONICS INC.) 16 April 2020 (2020-04-16) entire document | 1-56 |

☐ Further documents are listed in the continuation of Box C.    ☑ See patent family annex.

| | | |
| --- | --- | --- |
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **29 January 2023** | **09 February 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.

**PCT/CN2022/095566**

| Patent document cited in search report | | | Publication date (day/month/year) | Patent family member(s) | | | Publication date (day/month/year) |
|---|---|---|---|---|---|---|---|
| CN | 110754120 | A | 04 February 2020 | US | 2020059862 | A1 | 20 February 2020 |
| | | | | WO | 2018202751 | A1 | 08 November 2018 |
| | | | | KR | 20200002873 | A | 08 January 2020 |
| | | | | EP | 3619987 | A1 | 11 March 2020 |
| | | | | EP | 3619987 | B1 | 24 November 2021 |
| | | | | CN | 110754120 | B | 03 May 2022 |
| | | | | US | 11153822 | B2 | 19 October 2021 |
| | | | | KR | 102424043 | B1 | 22 July 2022 |
| CN | 111542102 | A | 14 August 2020 | | None | | |
| CN | 104796973 | A | 22 July 2015 | CN | 104796973 | B | 25 September 2018 |
| WO | 2020075930 | A1 | 16 April 2020 | US | 2021153126 | A1 | 20 May 2021 |
| | | | | US | 11166236 | B2 | 02 November 2021 |

Form PCT/ISA/210 (patent family annex) (July 2022)